# FASCICULE DE BREVET EUROPEEN

(11) **EP 4 174 227 B1**
(45) Date de publication et mention de la délivrance du brevet: **27.12.2023**
(21) Numéro de dépôt: 22203713.7
(22) Date de dépôt: 26.10.2022
(51) Int. Cl.: D04H 1/46, D04H 1/74, D04H 11/08, D04H 18/02

(54) **PROCÉDÉ ET DISPOSITIF DE FABRICATION DE REVÊTEMENTS INTÉRIEURS À PARTIR D'UNE STRUCTURE SANDWICHE**
VERFAHREN UND VORRICHTUNG ZUR HERSTELLUNG VON INNENBESCHICHTUNGEN AUS EINER SANDWICHSTRUKTUR
METHOD AND DEVICE FOR PRODUCING INNER LINERS FROM A SANDWICH STRUCTURE

(30) Priorité: 29.10.2021 FR 2111531
(43) Date de publication de la demande: 03.05.2023
(73) Titulaire: Adler Pelzer France Grand-Est, 08210 Mouzon (FR)
(72) Inventeur: BATHELIER, Xavier, 08240 SAINT PIERREMONT (FR); BAUDET, Daniel, 08210 MOUZON (FR); TAVENAUX, Jessy, 08450 RAUCOURT ET FLABA (FR)
(74) Mandataire: Lavoix

(56) Documents cités:
- EP-A1- 0 520 911
- EP-A1- 0 859 077
- FR-A1- 2 174 880
- FR-A1- 3 041 001

## Description

La présente invention concerne un procédé de fabrication de revêtements intérieurs, notamment un revêtement de sol pour un véhicule automobile.

On connait déjà, dans l'état de la technique, des procédés de fabrication de revêtements intérieurs pour véhicules automobiles, basés sur l'utilisation d'une machine de type DILOUR^{®}.

Une telle machine a pour particularité de comporter des convoyeurs recouverts de brosses qui servent à la formation d'un velours homogène. Cette machine comporte un dispositif d'aiguilletage dont les aiguilles entrainent des fibres d'une nappe déposée sur le convoyeur à travers les poils des brosses.

Le fonctionnement d'une telle machine ainsi que des organes la constituant est décrit en détail dans EP 0 183 952.

On connait également, dans l'état de la technique, notamment d'après FR 1 558 413, un procédé de fabrication d'un revêtement, comprenant une étape de réalisation d'un voile de fibres ayant une orientation moyenne donnée par rapport une direction longitudinale, suivie d'une étape de passage du voile à travers un dispositif de bouclage comprenant un ensemble de disques tournants et d'éléments fixes de bouclage, de manière à générer des ondulations.

Conformément à ce procédé, le voile est formé par nappage avec entrecroisement de fibres, le voile étant replié sur lui-même avant d'être étiré dans un dispositif d'étirage pour obtenir une orientation souhaitée des fibres.

Il est toutefois à noter que le dispositif de nappage et le dispositif d'étirage sont généralement coûteux, ce qui a un impact sur l'intérêt économique du revêtement. En outre, l'étirage réalisé est généralement important, notamment présentant un rapport d'étirage pouvant atteindre 5, ce qui peut causer des irrégularités dans le voile et par suite dans le revêtement final.

L'invention a notamment pour but de remédier à ces inconvénients, en proposant un procédé de fabrication de revêtement plus simple et économique à mettre en oeuvre, tout en permettant la réalisation d'un revêtement de bonne qualité.

A cet effet, l'invention a notamment pour objet un procédé de fabrication de revêtements de sol de véhicule automobile, comprenant :
- une étape de réalisation d'un voile de fibres, allongé dans une direction longitudinale, dont les fibres présentent une orientation formant un angle moyen par rapport à la direction longitudinale,
- une étape de passage du voile de fibres, le long de la direction longitudinale, à travers un dispositif de bouclage comprenant un ensemble de disques tournants et d'éléments fixes de bouclage, de manière à générer des ondulations,
- suite à l'étape de passage, une étape d'amenée de la nappe sur un convoyeur équipé de brosses, et d'accumulation des ondulations dans les brosses de manière à atteindre une densité prédéterminée,
- une étape de dépôt d'une première nappe e fibres pré-aiguilletée sur les ondulations accumulées,
- une étape d'assemblage des ondulations accumulées avec la première nappe pré-aiguilletée par aiguilletage à travers les brosses pour obtenir une structure,

caractérisé en ce que le procédé comporte :
   - une étape d'assemblage de la structure avec une seconde nappe de fibres pré-aiguilletée, afin d'obtenir une structure sandwiche, et
   - une étape de séparation de la structure sandwiche pour obtenir deux revêtements velours symétriques,
et en ce que :
   - le voile est un voile de carde présentant un angle moyen d'orientation des fibres compris entre 5 et 10°, et une masse surfacique comprise entre 80 et 120 g/m²,
   - le procédé comporte, préalablement à l'étape de passage, une étape d'étirement longitudinal du voile, d'un rapport d'allongement compris entre 1,5 et 2, afin de réduire sa masse surfacique.

Le procédé selon l'invention prévoit de réaliser le revêtement à partir d'une structure sandwiche, en la séparant.

A cet effet, il apparait qu'une orientation des fibres présentant un angle moyen compris entre 5 et 10° est optimal pour obtenir une structure sandwiche de hauteur adéquate. Ainsi, un simple voile de carde est utilisé dans le présent procédé.

Afin d'optimiser encore le procédé, un étirage complémentaire est réalisé avant l'étape de bouclage, avec un rapport d'étirement inférieur à 2. Ceci permet de réduire la masse surfacique du voile et de limiter les efforts appliqués aux fibres au cours du procédé.

Un procédé selon l'invention peut comporter en outre l'une ou plusieurs des caractéristiques suivantes, prises seules ou selon toutes les combinaisons techniquement envisageables.
- Les ondulations sont formées par des boucles présentant chacune une largeur G prédéfinie dans une direction transversale perpendiculaire à la direction longitudinale, et une hauteur H prédéfinie dans une direction d'élévation perpendiculaire aux directions longitudinale et transversale, l'angle moyen α d'orientation des fibres du voile (20) avec la direction longitudinale (X) respectant la relation sinα=G/2H à +/- 5° près.
- Les fibres du voile, les fibres de la première nappe et les fibres de la seconde nappe sont choisies parmi des fibres réalisées à base d'un polymère thermoplastique, tel que du polypropylène, du polyéthylène téréphtalate, du polyamide, de l'acide polylactique, leurs mélanges ou leurs copolymères, ou des fibres d'origine naturelle telles des fibres de lin ou de chanvre utilisées seules ou en mélanges.
- Les fibres du voile, les fibres e la première nappe et les fibres de la seconde nappe sont toutes réalisées dans le même matériau.
- Au moins deux ensembles de fibres parmi les fibres du voile, les fibres de la première nappe et les fibres de la seconde nappe sont réalisés dans des matériaux différents.
- Le procédé de fabrication comprend, suite à l'étape d'assemblage des ondulations accumulées avec la première nappe pré-aiguilletée par aiguilletage et préalablement à l'étape d'assemblage de la structure avec la seconde nappe, une étape de retournement de la structure.

L'invention concerne également un dispositif de fabrication de revêtements de sol de véhicule automobile, comprenant :
- un dispositif de réalisation d'un voile de fibres allongé dans une direction longitudinale configuré pour donner aux fibres une orientation formant un angle moyen par rapport à la direction longitudinale,
- un dispositif de bouclage comprenant un ensemble de disques tournants et d'éléments fixes de bouclage, de manière à générer des ondulations,
- un convoyeur équipé de brosses, agencé en sortie du dispositif de bouclage pour accumuler les ondulations dans les brosses de manière à atteindre une densité prédéterminée,
- un premier dispositif de dépôt d'une première nappe e fibres pré-aiguilletée sur les ondulations accumulées,
- un premier dispositif d'aiguilletage pour l'assemblage des ondulations accumulées avec la première nappe pré-aiguilletée par aiguilletage à travers les brosses pour obtenir une structure,

caractérisé en ce que le dispositif de fabrication comporte :
   - un second dispositif de dépôt d'une seconde nappe de fibres pré-aiguilletée sur les ondulations accumulées de la structure, afin d'obtenir une structure sandwiche, et
   - un dispositif de séparation de la structure sandwiche pour obtenir deux revêtements velours symétriques,
et en ce que :
   - le dispositif de réalisation de voile est une carde configurée pour que le voile de carde réalisé présente un angle moyen d'orientation des fibres compris entre 5 et 10°, et une masse surfacique comprise entre 80 et 120 g/m²,
   - le dispositif de fabrication comporte, en amont du dispositif de bouclage, un dispositif d'étirement longitudinal du voile, configuré pour appliquer un rapport d'allongement compris entre 1,5 et 2.

Un dispositif de fabrication selon l'invention peut comporter en outre l'une ou plusieurs des caractéristiques suivantes, prises seules ou selon toutes les combinaisons techniquement envisageables.
- Le dispositif d'étirement comporte un premier ensemble e cylindres d'entrainement amonts, et un second ensemble de cylindres d'entraînement avals, les cylindres d'entrainement aval du second ensemble étant mobiles en rotation avec une vitesse de rotation supérieure à celle des cylindres d'entrainement amont du premier ensemble de sorte que le voile de carde n'est pas entraîné avec la même vitesse sur toute sa longueur.
- Le dispositif de fabrication comporte, en aval du premier dispositif d'aiguilletage et en amont du second dispositif de dépôt, un dispositif de retournement de la structure.

Différents aspects et avantages de l'invention seront mis en lumière dans la description qui va suivre, donnée uniquement à titre d'exemple non limitatif et faite en se référant aux figures annexées, parmi lesquelles :
[Fig 1] La figure 1 représente schématiquement un dispositif de fabrication d'un revêtement selon un exemple de mode de réalisation de l'invention ;
[Fig 2] La figure 2 représente schématiquement, de profil, une structure sandwiche fabriquée grâce au dispositif de la figure 1, avant une étape de séparation ;
[Fig 3] La figure 3 représente schématiquement, de profil, des revêtements obtenus par séparation de la structure sandwich de la Figure 2 ;
[Fig 4] La figure 4 représente schématiquement, en vue du dessus, des fibres d'un voile de fibres passant dans le dispositif de la figure 1.

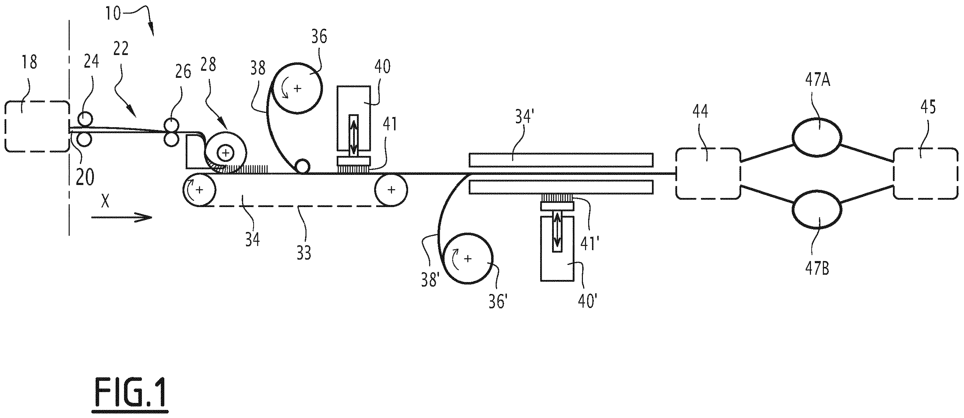

On a représenté, sur la figure 1, un dispositif 10 de fabrication de revêtements aiguilletés 12, 12'. Ce dispositif de fabrication 10 permet de réaliser un procédé de fabrication de revêtements selon un exemple de mode de réalisation de l'invention.

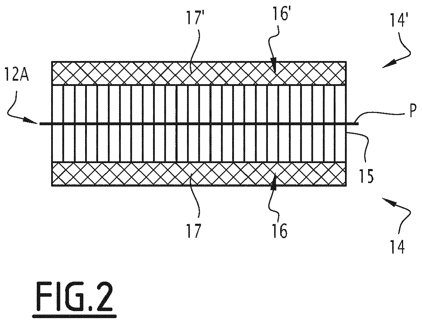

Conformément à la présente invention, les revêtements 12, 12' sont réalisés par la séparation en deux d'une structure sandwiche 12A représentée sur la figure 2, le long d'un plan de symétrie P, comme cela sera expliqué ultérieurement plus en détail.

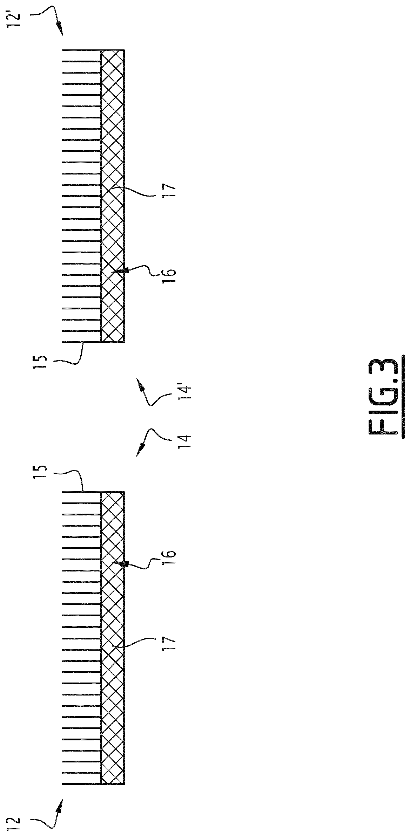

Les revêtements 12, 12' obtenus après séparation sont représentés sur la figure 3. Ces revêtements 12, 12' sont identiques, si bien qu'ils seront décrits conjointement ci-après.

Chaque revêtement 12, 12' forme par exemple un revêtement intérieur, et plus particulièrement un revêtement intérieur de véhicule automobile, destiné à être posé sur le sol ou sur une paroi du véhicule. En variante, le revêtement 12, 12' peut former tout revêtement intérieur envisageable.

Chaque revêtement 12, 12' présente une couche d'endroit 14, 14' de fibres 15 non liées et parallèles entre elles, et une couche d'envers 16, 16' formant une semelle formée essentiellement de fibres 17, 17' liées entre elles.

Les fibres 15 et 17, 17' sont par exemple réalisées à base d'un polymère thermoplastique, tel que du polypropylène, du polyéthylène téréphtalate (PET), du polyamide, de l'acide polylactique, leurs mélanges ou leurs copolymères. En variante les fibres 15 et 17, 17' peuvent être des fibres d'origine naturelle telles des fibres de lin ou de chanvre utilisées seules ou en mélanges.

Les fibres 15 et 17, 17' peuvent être de natures différentes. Par exemple les fibres 15 peuvent être à base de polyamide tandis que les fibres 17, 17' seront à base de PET. De même, les fibres 17 et les fibres 17' peuvent être de même nature, ou en variante de natures différentes.

Les couches 14 et 16, 16' peuvent être formées d'un mélange comprenant un pourcentage de fibres liantes c'est-à-dire par exemple de fibres bi-composantes dont l'un des composants a une température de fusion inférieure à l'autre.

La couche d'endroit 14 présente un aspect extérieur velours. Ce velours est constitué des fibres 15.

L'épaisseur de la couche d'endroit 14 est généralement supérieure à celle de la semelle 16. La couche d'endroit 14 présente par exemple une épaisseur comprise entre 2 et 8 mm.

La densité de velours dans la couche d'endroit 14 est comprise de préférence entre 0,05 et 0,1 g/cm³, par exemple entre 0,07 et 0,08 g/cm³. Une telle densité assure un bel aspect, une bonne résistance à l'abrasion et une facilité de nettoyage.

Cette densité est mesurée par exemple en déterminant le rapport entre la masse de la matière obtenue en rasant la totalité de la couche d'endroit 14 jusqu'à la semelle 16, 16', rapportée au volume initial de la couche rasée.

Le rendement du velours, constitué du rapport du poids de velours après rasage total jusqu'à la semelle par rapport au poids total de la pièce 12, est par exemple compris entre 50 et 80%

La longueur des fibres utilisées est généralement comprise entre 60 et 200 mm.

Le titre des fibres est de préférence compris entre 4 (fibre bi composante) et 17 dtex.

La frisure des fibres est de préférence comprise entre 2,5 et 4 ondulations par cm.

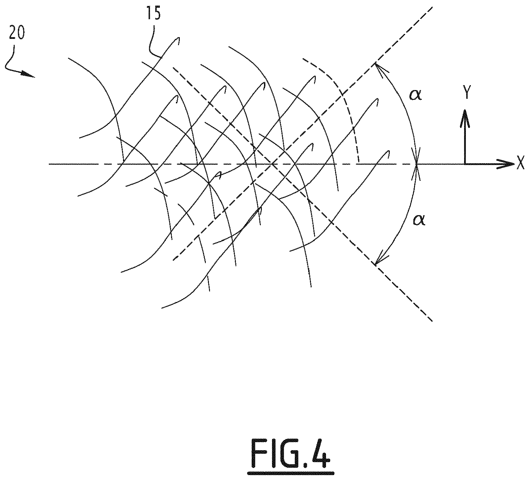

Le dispositif de fabrication 10 comporte un dispositif de cardage 18, propre à réaliser un voile de carde 20 s'étendant dans une direction longitudinale X, correspondant à une direction de production (direction machine). Le voile de carde 20, représenté schématiquement sur la figure 4, comporte lesdites premières fibres 15, majoritairement orientées dans une direction d'orientation formant un angle α avec la direction longitudinale X. Le dispositif de cardage 18 est configuré pour que la direction d'orientation forme un angle α compris entre 5 et 10° avec la direction longitudinale X.

On notera que l'angle α est un angle moyen, c'est-à-dire que l'orientation de chaque fibre peut dévier légèrement de cet angle α, mais que la moyenne des angles formés par les orientations de toutes les fibres est sensiblement égale à cet angle α.

Par ailleurs, le dispositif de cardage 18 est configuré pour que le voile de carde 20 présente une masse surfacique comprise entre 80 et 120 g/m².

On notera que le réglage d'un dispositif de cardage 18 pour obtenir une orientation souhaitée des fibres et une masse surfacique souhaitée est une procédure classique pour l'homme du métier, si bien que l'homme du métier saura configurer le dispositif de cardage conformément aux paramètres indiqués précédemment.

Le procédé de fabrication comporte donc une étape de réalisation du voile de carde 20 au moyen du dispositif de cardage 18.

Le dispositif de fabrication 10 comporte, en aval du dispositif de cardage 18, un dispositif d'étirement 22 destiné à étirer le voile de carde 20. Ainsi, le procédé de fabrication comporte l'étirement du voile de carde 20 au moyen du dispositif d'étirement 22.

Le dispositif d'étirement 22 est configuré pour effectuer un étirement longitudinal avec un rapport d'allongement compris entre 1,5 et 2. On rappellera ici qu'un rapport d'allongement est le rapport de la longueur d'une portion de voile après étirement sur la longueur de cette même portion de voile avant étirement.

Cet étirement longitudinal a pour effet de réduire la masse surfacique du voile de carde 20.

Le dispositif d'étirement 22 comporte par exemple un premier ensemble 24 de cylindres d'entrainement amonts, et un second ensemble 26 de cylindres d'entraînement avals. Chaque ensemble 24, 26 comporte deux cylindres complémentaires entre lesquels passe le voile de carde 20, en contact avec ces deux cylindres. L'entraînement en rotation des cylindres de chaque ensemble 24, 26 permet donc l'entraînement du voile de carde 20 le long de la direction longitudinale X.

Les cylindres d'entrainement aval du second ensemble 26 sont mobiles en rotation avec une vitesse de rotation supérieure à celle des cylindres d'entrainement amont du premier ensemble 24, de sorte que le voile de carde 20 n'est pas entraîné avec la même vitesse sur toute sa longueur. Ce voile de carde 20, passant entre les cylindres de chaque ensemble 24, 26, est alors étiré du fait de cette différence de vitesse.

On notera Vₑ la vitesse périphérique des cylindres d'entrée et Pₑ la masse surfacique du voile s'engageant entre les cylindres d'entrée, V, la vitesse périphérique des cylindres de sortie et Ps la masse surfacique de la nappe s'engageant entre les cylindres d'entrée. Le rapport d'allongement E peut être déterminé par la relation suivante : E = Ve/Vs = Pe/Ps.

Comme indiqué précédemment, le rapport d'allongement E dans le cadre de l'invention est choisi entre 1,5 et 2.

Nous avons décrit un dispositif d'étirement 22 formé par deux jeux de cylindres mais cet étirement pourrait être effectué par des moyens différents.

Le dispositif de fabrication 10 comporte, en sortie du dispositif d'étirement 22, un dispositif de bouclage 28 connu en soi, par exemple en partie similaire à celui décrit dans EP 0 859 077. Un tel dispositif de bouclage 28 est destiné à boucler les fibres 15 du voile 20 en les verticalisant, formant ainsi des ondulations. Ainsi, le procédé de fabrication comporte ici une étape de bouclage des fibres 15 du voile de carde 20, au moyen du dispositif de bouclage 28.

Ce dispositif de bouclage 28 comporte un ensemble de disques tournants 30 portés sur un axe commun transversal, entrainés en rotation continue à une vitesse périphérique de préférence égale à la vitesse d'entrée du voile 20 dans ce dispositif de bouclage 28.

Les disques tournants 30 sont de préférence chacun pourvu sur sa périphérie d'une denture permettant l'entrainement du voile 20.

Le dispositif de bouclage 28 comporte également des doigts boucleurs 32, chacun étant disposé entre deux disques 30 adjacents. Les doigts boucleurs 32 s'étendent jusqu'à une extrémité se présentant sensiblement de manière tangentielle par rapport aux disques 30. Ainsi, chaque fibre 15 se retrouve prébouclée en étant entrainée à chaque extrémité par un disque 30 respectif, en surmontant le doigt boucleur 32 correspondant disposé entre ces deux disques 30.

Le cheminement d'une fibre 15 entre deux disques adjacents 30 va maintenant être décrit.

La fibre 15 se présente avec l'angle α avec la direction longitudinale X, qui est également la direction d'avancée du voile de carde 20 dans le dispositif de bouclage 28.

Une partie avant de la fibre 15 est entrainée par l'un des disques 30, et une partie arrière de cette fibre 15 est entrainée par l'autre disque 30. Ces deux disques étant solidaires d'un même axe, leurs vitesses de rotation sont identiques.

La partie avant de la fibre 15 arrive en premier en bout de course, contre une butée qui sera décrite ultérieurement. Alors que la partie avant est en butée, la partie arrière continue d'avancer jusqu'à venir elle aussi en butée, courbant ainsi la fibre 15 qui forme alors une boucle.

Les fibres 15 passant dans le dispositif de bouclage 28 ont toutes le même comportement tel que décrit ci-dessus, si bien que l'ensemble des fibres 15 bouclées forme des ondulations sur la largeur du voile 20, prise dans une direction transversale Y perpendiculaire à la direction longitudinale X.

Chaque boucle présente une hauteur H, prise dans une direction d'élévation perpendiculaire à la direction longitudinale et à la direction transversale, et une largeur G prise dans la direction transversal Y. Il est à noter que la largeur G correspond sensiblement à l'intervalle entre deux disques 30 adjacents.

Si la relation sinα ≤ G/2H est vérifiée, alors les fibres développent dans la boucle exactement la même longueur ce qui garantit une parfaite parallélisation des fibres.

Les disques sont positionnés de telle sorte qu'ils pénètrent d'une profondeur P ≤ H à l'intérieur des brosses d'une bande 33 du même type que les brosses équipant le convoyeur d'une machine Dilour^{®}. A l'endroit des disques, les poils constituant les brosses sont suffisamment souples pour s'écarter et se regroupent dans l'espace libre entre les disques.

On a alors pu constater que ce type de bande pouvait servir de butée telle qu'évoqué précédemment, suivant le principe décrit dans EP0 859 077. En effet, lorsqu'ils ne sont plus en présence des disques, les poils de brosse, en retrouvant leur position initiale, exercent une pression sur les fibres ce qui permet de bloquer puis de maintenir la structure des ondulations.

La butée évoquée précédemment est donc formée d'une bande 33 d'un convoyeur 34. La bande 33 est une bande sans fin, s'étendant entre deux cylindres d'entraînement. La bande 33 est munie de brosses.

La bande 33 est déplacée, dans la direction longitudinale X, avec une vitesse inférieure à la vitesse tangentielle des disques tournants 30, si bien qu'ils ont l'effet d'une butée pour les fibres 15 sortant de ces disques tournants 30.

Les ondulations viennent alors s'accumuler sur les brosses de la bande 33, avec une densité dépendant de la différence de vitesse entre les disques tournants 30 et la bande 33. L'homme du métier saura déterminer cette différence de vitesse en fonction de la densité souhaitée.

Par exemple si la masse surfacique souhaitée du velours est 300g/m², soit 600 g/m² pour la structure sandwiche et si le voile après étirage a une masse surfacique de 50g/m², le rapport des vitesses entre le convoyeur et la vitesse périphérique des disques sera de 600/50=12. Ce rapport élevé garantit le fonctionnement selon la logique de « butée » de EP 0 859 077.

Ce dispositif permet d'obtenir une grande densité de velours, qui n'est généralement pas atteignable par des procédés classiques.

Les brosses évitent également que les fibres 15 soient entrainées vers le haut par les disques 30, ce qui nuirait à la formation des ondulations.

Le dispositif de fabrication 10 comporte ensuite un premier dispositif 36 de dépôt d'une première nappe 38 sur les ondulations accumulées sur les brosses. La première nappe 38 est formée par lesdites fibres 17, par exemple de même nature que celles du voile de carde 20.

La première nappe 38 est pré-aiguilletée.

La structure formée par l'empilement des fibres 15 ondulées et de cette première nappe 38, est destiné ensuite à passer sous un premier dispositif d'aiguilletage 40 ou tête d'aiguilletage, comprenant au moins une première planche d'aiguilles 41.

L'ensemble formé par le convoyeur 34 à brosses et les planches à aiguilles est connu en soi, et par exemple formé par une machine de type Dilour^{®}.

La première planche à aiguilles 41 est disposée en regard de la bande 33 du convoyeur 34, et elle est déployable verticalement vers cette bande 33 pour percer ladite structure.

La planche à aiguilles 41 porte une pluralité d'aiguilles, permettant une densité d'aiguilletage de l'ordre de 200 à 400 cps/cm².

Cette planche d'aiguilles 41 permet de solidariser la première nappe 38 à la structure constituée des ondulations c'est-à-dire le voile de carde 20 déposé totalement ou partiellement à l'intérieur des brosses, en extrayant des fibres de la première nappe 38 et en les faisant pénétrer dans le voile de carde 20. A cet effet, on rappellera que la pénétration des aiguilles sur ce type de machine Dilour^{®} s'effectue du haut vers le bas.

La profondeur de pénétration des fibres de la première nappe 38 dans le voile 20 permettant cet assemblage de la première nappe 38 sur le voile de carde 20 peut être variable, partant d'une valeur faible de l'ordre de 0,5 à 1 mm jusqu'à la profondeur de pénétration P, auquel cas les fibres de la première nappe 38 contribueront également à nourrir le velours du voile 20.

Au cours de cette étape, la couche d'endroit 14 est formée, ainsi que la première semelle 16, en entremêlant les fibres 15 avec les fibres 17 de la première nappe 38.

La structure formée par la couche d'endroit 14 et la première semelle est ensuite extraite des brosses du convoyeur de manière classique, puis déposée sur une seconde nappe 38' provenant d'un second dispositif de dépôt 36'. Le second dispositif de dépôt 36' est par exemple disposé dans une fosse en sortie du premier convoyeur 34.

La seconde nappe 38' est déposée sur une table 34' d'aiguilletage.

L'ensemble formé par la seconde nappe 38', sur laquelle est déposée la structure, est introduit sur un second dispositif d'aiguilletage 40' comprenant au moins une seconde planche d'aiguilles 41' placée sous la structure.

On notera que la table d'aiguilletage 34' n'est pas formée par un convoyeur, car ledit ensemble est entrainé par un dispositif d'enroulement disposé en fin de ligne, qui sera décrit ultérieurement. Le second dispositif d'aiguilletage 40' peut donc être formé par une aiguilleteuse conventionnelle et non par une machine de type Dilour^{®}.

La seconde nappe 38' est formée par les fibres 17' évoquées précédemment, qui sont par exemple de même nature que les fibres 17 de la première nappe 38.

La seconde nappe 38' est pré-aiguilletée.

Ainsi, la seconde nappe 38' est aiguilletée avec le voile 20 de la même manière que la première nappe 38 a été précédemment aiguillée avec ce même voile 20.

Au cours de cette étape, la seconde semelle 16' est formée, en entremêlant les fibres 15 avec les fibres 17' de la seconde nappe 38'.

Conformément à une variante envisageable, le dispositif de fabrication 10 comporte, en aval du premier dispositif d'aiguilletage, un dispositif de retournement de la structure, propre à extraire la structure des brosses du convoyeur 33 et à reposer la structure sur l'enclume d'un second dispositif d'aiguilletage. Ainsi, la structure présente ses fibres 15 vers le haut.

Dans tous les cas, la structure et la seconde nappe 38' sont disposées de sorte que la seconde nappe 38' se trouve de l'autre côté du voile 20 par rapport à la première nappe 38, de manière à former une structure sandwiche, avec le voile 20 disposé entre les première 38 et seconde 38' nappes.

Le dispositif 10 comporte ensuite un dispositif 44 de séparation de la structure sandwiche en deux parties symétriques, en découpant la structure sandwiche parallèlement aux semelles 16, 16', le long du plan de symétrie P évoqué précédemment.

Cette opération s'effectue à l'aide d'une machine appelée refendeuse communément utilisée dans le domaine du cuir et des non-tissés, munie d'une lame souple et dont la logique de fonctionnement est comparable à celle d'une scie à ruban. On notera que la fixation mécanique de la structure sandwiche par aiguilletage est suffisante pour la séparation.

En aval du dispositif de séparation 44, deux dispositifs d'enroulement 47A, 47B exercent sur les semelles 16, 16' une traction respective, responsable de l'entrainement de la structure sandwiche depuis d'assemblage avec la seconde nappe 38'. Les dispositif d'enroulement 47A, 47B enroulent respectivement les deux parties de la structure, pour former deux rouleaux, l'un comprenant formant le premier revêtement 12 et l'autre formant le second revêtement 12'.

Les rouleaux sont ensuite amenés jusqu'à un dispositif 45 de liage des fibres de la couche d'endroit 14 dans la première semelle 16 pour le premier revêtement 12, et de la couche d'endroit dans la seconde semelle 16' pour le second revêtement 12'. Ce dispositif de liage 45 est par exemple un appareil de thermofixation, notamment un four à air traversant ou un four à infrarouges.

Le liage peut être réalisé de toute manière envisageable, par exemple en incorporant un latex dans les nappes 38, 38', ou entre chaque nappe 38, 38' et le voile 20, ou en incorporant des fibres liantes thermofusibles parmi les fibres du voile 20 et/ou dans chaque nappe 38, 38'. Les fibres liantes sont généralement préférées au latex, pour des raisons de recyclabilité. Ce liage, nécessaire à toutes les constructions de type aiguilleté pour assurer une cohésion suffisante des fibres du velours avec la semelle et éviter les problèmes d'arrachage ou d'abrasion, est réalisé de manière classique et ne sera donc pas décrit plus en détail.

Il est à noter que, afin que le velours présente un aspect optimal, notamment une densité optimale, et qu'il ne présente pas de fibres cassées prématurément dans les disques de bouclage, qui nuiraient à son aspect général, l'angle α d'orientation des fibres doit respecter la relation sinα ≤ G/2H à +/- 5° près.

Il est à noter que, dans le cadre de revêtements réalisés à partir d'une structure sandwiche en la séparant, la hauteur de boucle nécessaire est d'environ H = 15 mm (notamment du fait de la rétractation importante du matériau PET après séparation). Une telle hauteur correspond à un angle faible de l'ordre de 2°.

Ainsi, un voile de carde direct est utilisé, un tel voile présentant un angle moyen des fibres compris entre 5 et 10°. On constate que la relation sinα ≤ G/2H est bien vérifiée ce qui assure une bonne parallélisation des fibres dans le velours. Il a en effet été constaté qu'un tel voile de carde est optimal pour obtenir une hauteur suffisante pour réaliser des revêtements à partir d'une structure sandwiche séparée.

Il est également apparu qu'un étirage complémentaire directement avant l'entrée dans le dispositif de bouclage 28, avec un rapport d'étirement compris entre 1,5 et 2, permet de réduire la masse surfacique du voile et de limiter les efforts lors du bouclage sans modifier de façon significative l'angle α et donc sans nuire à la qualité du produit. Ceci permet d'obtenir un résultat optimal.

## Revendications

1. Procédé de fabrication de revêtements (12, 12') de sol de véhicule automobile, comprenant :
- une étape de réalisation d'un voile (20) de fibres (15), allongé dans une direction longitudinale (X), dont les fibres (15) présentent une orientation formant un angle moyen (α) par rapport à la direction longitudinale (X),
- une étape de passage du voile (20) de fibres, le long de la direction longitudinale (X), à travers un dispositif de bouclage (28) comprenant un ensemble de disques tournants (30) et d'éléments fixes de bouclage (32), de manière à générer des ondulations,
- suite à l'étape de passage, une étape d'amenée de la nappe (20) sur un convoyeur (34) équipé de brosses (33), et d'accumulation des ondulations dans les brosses (33) de manière à atteindre une densité prédéterminée,
- une étape de dépôt d'une première nappe (38) de fibres (17) pré-aiguilletée sur les ondulations accumulées,
- une étape d'assemblage des ondulations accumulées avec la première nappe pré-aiguilletée (38) par aiguilletage à travers les brosses (33) pour obtenir une structure,
**caractérisé en ce que** le procédé comporte :
- une étape d'assemblage de la structure avec une seconde nappe (38') de fibres (17') pré-aiguilletée, afin d'obtenir une structure sandwiche (12A), et
- une étape de séparation de la structure sandwiche (12A) pour obtenir deux revêtements velours symétriques (12, 12'),
et **en ce que** :
- le voile (20) est un voile de carde présentant un angle moyen (α) d'orientation des fibres (15) compris entre 5 et 10°, et une masse surfacique comprise entre 80 et 120 g/m²,
- le procédé comporte, préalablement à l'étape de passage, une étape d'étirement longitudinal du voile (20), d'un rapport d'allongement compris entre 1,5 et 2, afin de réduire sa masse surfacique.

2. Procédé de fabrication selon la revendication 1, dans lequel les ondulations sont formées par des boucles présentant chacune une largeur G prédéfinie dans une direction transversale (Y) perpendiculaire à la direction longitudinale (X), et une hauteur H prédéfinie dans une direction d'élévation perpendiculaire aux directions longitudinale (X) et transversale (Y), l'angle moyen α d'orientation des fibres du voile (20) avec la direction longitudinale (X) respectant la relation sinα=G/2H à +/- 5° près.

3. Procédé de fabrication selon la revendication 1 ou 2, dans lequel les fibres (15) du voile (20), les fibres (17) de la première nappe (38) et les fibres (17') de la seconde nappe (38') sont choisies parmi des fibres réalisées à base d'un polymère thermoplastique, tel que du polypropylène, du polyéthylène téréphtalate (PET), du polyamide, de l'acide polylactique, leurs mélanges ou leurs copolymères, ou des fibres d'origine naturelle telles des fibres de lin ou de chanvre utilisées seules ou en mélanges.

4. Procédé de fabrication selon l'une quelconque des revendications 1 à 3, dans lequel les fibres (15) du voile (20), les fibres (17) de la première nappe (38) et les fibres (17') de la seconde nappe (38') sont toutes réalisées dans le même matériau.

5. Procédé de fabrication selon l'une quelconque des revendications 1 à 3, dans lequel au moins deux ensembles de fibres parmi les fibres (15) du voile (20), les fibres (17) de la première nappe (38) et les fibres (17') de la seconde nappe (38') sont réalisés dans des matériaux différents.

6. Procédé de fabrication selon l'une quelconque des revendications précédentes, comprenant, suite à l'étape d'assemblage des ondulations accumulées avec la première nappe pré-aiguilletée (38) par aiguilletage et préalablement à l'étape d'assemblage de la structure avec la seconde nappe (38'), une étape de retournement de la structure.

7. Dispositif (10) de fabrication de revêtements (12, 12') de sol de véhicule automobile, comprenant :
- un dispositif (18) de réalisation d'un voile (20) de fibres (15) allongé dans une direction longitudinale (X), configuré pour donner aux fibres (15) une orientation formant un angle moyen (α) par rapport à la direction longitudinale (X),
- un dispositif de bouclage (28) comprenant un ensemble de disques tournants (30) et d'éléments fixes de bouclage (32), de manière à générer des ondulations,
- un convoyeur (34) équipé de brosses (33), agencé en sortie du dispositif de bouclage (28) pour accumuler les ondulations dans les brosses (33) de manière à atteindre une densité prédéterminée,
- un premier dispositif (36) de dépôt d'une première nappe (38) de fibres (17) pré-aiguilletée sur les ondulations accumulées,
- un premier dispositif d'aiguilletage (40), pour l'assemblage des ondulations accumulées avec la première nappe pré-aiguilletée (38) par aiguilletage à travers les brosses (33) pour obtenir une structure,
**caractérisé en ce que** le dispositif de fabrication (10) comporte :
- un second dispositif (36') de dépôt d'une seconde nappe (38') de fibres (17') pré-aiguilletée sur les ondulations accumulées de la structure, afin d'obtenir une structure sandwiche (12A), et
- un dispositif (44) de séparation de la structure sandwiche (12A) pour obtenir deux revêtements velours symétriques (12, 12'),
et **en ce que** :
- le dispositif (18) de réalisation de voile est une carde configurée pour que le voile de carde (20) réalisé présente un angle moyen (α) d'orientation des fibres (15) compris entre 5 et 10°, et une masse surfacique comprise entre 80 et 120 g/m²,
- le dispositif de fabrication (10) comporte, en amont du dispositif de bouclage (28), un dispositif (22) d'étirement longitudinal du voile (20), configuré pour appliquer un rapport d'allongement compris entre 1,5 et 2.

8. Dispositif de fabrication selon la revendication 7, dans lequel le dispositif d'étirement (22) comporte un premier ensemble (24) de cylindres d'entrainement amonts, et un second ensemble (26) de cylindres d'entraînement avals, les cylindres d'entrainement aval du second ensemble (26) étant mobiles en rotation avec une vitesse de rotation supérieure à celle des cylindres d'entrainement amont du premier ensemble (24), de sorte que le voile de carde (20) n'est pas entraîné avec la même vitesse sur toute sa longueur.

9. Dispositif de fabrication (10) selon la revendication 7 ou 8, comportant, en aval du premier dispositif d'aiguilletage (40) et en amont du second dispositif de dépôt (36'), un dispositif de retournement de la structure.

## Patentansprüche

1. Verfahren zur Herstellung von Kraftfahrzeugbodenbelägen (12, 12'), umfassend:
- einen Schritt eines Herstellen eines Vlieses (20) aus Fasern (15), das in einer Längsrichtung (X) länglich ist, wobei die Fasern (15) eine Ausrichtung aufweisen, die einen mittleren Winkel (α) in Bezug auf die Längsrichtung (X) bildet,
- einen Durchlaufschritt des Vlieses (20) aus Fasern entlang der Längsrichtung (X) durch eine Schlingenvorrichtung (28), umfassend eine Anordnung von drehenden Scheiben (30) und festen Schlingenelementen (32), um Wellen zu erzeugen,
- im Anschluss an den Durchlaufschritt einen Schritt zum Zuführen der Bahn (20) auf einen mit Bürsten (33) ausgestatteten Förderer (34) und zum Ansammeln der Wellen in den Bürsten (33), um eine vorbestimmte Dichte zu erreichen,
- einen Ablegeschritt eines ersten Vlieses (38) aus vorgenadelten Fasern (17) auf den angesammelten Wellen,
- einen Zusammenfügeschritt von angesammelten Wellen mit der ersten vorgenadelten Bahn (38) durch Nadeln durch die Bürsten (33), um eine Struktur zu erlangen, **dadurch gekennzeichnet, dass** das Verfahren Folgendes umfasst:
- einen Schritt des Zusammenfügens der Struktur mit einer zweiten Bahn (38') aus vorgenadelten Fasern (17'), um eine Sandwichstruktur (12A) zu erlangen, und
- einen Schritt zum Trennen der Sandwichstruktur (12A), um zwei symmetrische Velours-Beschichtungen (12, 12') zu erlangen,
und dadurch, dass:
- das Vlies (20) ein Kardenvlies ist, das einen mittleren Ausrichtungswinkel (α) der Fasern (15) von 5 bis 10° und eine flächenbezogene Masse von 80 bis 120 g/m² aufweist,
- wobei das Verfahren vor dem Durchlaufschritt einen Schritt umfasst, bei dem das Vlies (20) in Längsrichtung um ein Dehnungsverhältnis zwischen 1,5 und 2 gedehnt wird, um seine flächenbezogene Masse zu verringern.

2. Herstellungsverfahren nach Anspruch 1, wobei die Wellen durch Schleifen gebildet werden, die jeweils eine vordefinierte Breite G in einer Querrichtung (Y) senkrecht zu der Längsrichtung (X) und eine vordefinierte Höhe H in einer Erhebungsrichtung senkrecht zu der Längs- (X) und Querrichtung (Y) aufweisen, wobei der mittlere Winkel α der Ausrichtung der Fasern des Vlieses (20) mit der Längsrichtung (X) die Beziehung sinα=G/2H auf +/- 5° genau einhält.

3. Herstellungsverfahren nach Anspruch 1 oder 2, wobei die Fasern (15) des Vlieses (20), die Fasern (17) der ersten Bahn (38) und die Fasern (17') der zweiten Bahn (38') ausgewählt sind aus Fasern, die basierend auf einem thermoplastischen Polymer hergestellt werden, wie beispielsweise Polypropylen, Polyethylenterephthalat (PET), Polyamid, Polymilchsäure, deren Gemischen oder deren Copolymeren, oder Fasern natürlichen Ursprungs, wie beispielsweise Flachs- oder Hanffasern, die allein oder in Gemischen verwendet werden.

4. Herstellungsverfahren nach einem der Ansprüche 1 bis 3, wobei die Fasern (15) des Vlieses (20), die Fasern (17) der ersten Bahn (38) und die Fasern (17') der zweiten Bahn (38') alle aus demselben Material hergestellt sind.

5. Herstellungsverfahren nach einem der Ansprüche 1 bis 3, wobei mindestens zwei Fasereinheiten aus den Fasern (15) des Vlieses (20), den Fasern (17) der ersten Bahn (38) und den Fasern (17') der zweiten Bahn (38') aus unterschiedlichen Materialien hergestellt sind.

6. Herstellungsverfahren nach einem der vorherigen Ansprüche, umfassend nach dem Zusammenfügeschritt der angesammelten Wellen mit der ersten vorgenadelten Bahn (38) durch Vernadeln und vor dem Zusammenfügeschritt der Struktur mit der zweiten Bahn (38') einen Wendeschritt der Struktur.

7. Vorrichtung (10) zum Fertigen von Kraftfahrzeugbodenbelägen (12, 12'), umfassend:
- eine Vorrichtung (18) zum Herstellen eines Vlieses (20) aus Fasern (15), das in einer Längsrichtung (X) länglich ist, die konfiguriert ist, um den Fasern (15) eine Ausrichtung zu geben, die einen mittleren Winkel (α) in Bezug auf die Längsrichtung (X) bildet,
- eine Schlingenvorrichtung (28), umfassend eine Anordnung von drehenden Scheiben (30) und festen Schlingenelementen (32), um Wellen zu erzeugen,
- einen Förderer (34), der mit Bürsten (33) ausgestattet ist, der am Ausgang der Schlingenvorrichtung (28) angeordnet ist, um die Wellen in den Bürsten (33) anzusammeln, um eine vorbestimmte Dichte zu erreichen,
- eine erste Vorrichtung (36) zum Ablegen einer ersten Bahn (38) aus vorgenadelten Fasern (17) auf den angesammelten Wellen,
- eine erste Vernadelungsvorrichtung (40), zum Verbinden der angesammelten Wellen mit dem ersten vorgenadelten Vlies (38) durch Vernadeln durch die Bürsten (33), um eine Struktur zu erlangen,
**dadurch gekennzeichnet, dass** die Fertigungsvorrichtung (10) Folgendes umfasst:
- eine zweite Vorrichtung (36') zum Ablegen einer zweiten Bahn (38') aus vorgenadelten Fasern (17') auf den angesammelten Wellen der Struktur, um eine Sandwichstruktur (12A) zu erlangen, und
- eine Vorrichtung (44) zum Trennen der Sandwich-Struktur (12A), um zwei symmetrische Velours-Beschichtungen (12, 12') zu erlangen,
und dadurch, dass:
- die Vorrichtung (18) zur Herstellung des Vlieses eine Karde ist, die konfiguriert ist, damit das hergestellte Kardenvlies (20) einen mittleren Ausrichtungswinkel (α) der Fasern (15) zwischen 5 und 10° und eine flächenbezogene Masse zwischen 80 und 120 g/m² aufweist,
- die Herstellungsvorrichtung (10) stromaufwärts von der Schlingenvorrichtung (28) eine Vorrichtung (22) zur Längsstreckung des Vlieses (20) aufweist, die konfiguriert ist, um ein Dehnungsverhältnis zwischen 1,5 und 2 anzuwenden.

8. Herstellungsvorrichtung nach Anspruch 7, wobei die Streckvorrichtung (22) eine erste Einheit (24) von stromaufwärtigen Antriebswalzen und einen zweiten Einheit (26) von stromabwärtigen Antriebswalzen aufweist, wobei die stromabwärtigen Antriebswalzen der zweiten Einheit (26) mit einer höheren Drehgeschwindigkeit als die stromaufwärtigen Antriebswalzen der ersten Einheit (24) drehbar sind, sodass das Kardenvlies (20) nicht mit der gleichen Geschwindigkeit über seine gesamte Länge angetrieben wird.

9. Herstellungsvorrichtung (10) nach Anspruch 7 oder 8, die stromabwärts von der ersten Nadelvorrichtung (40) und stromaufwärts von der zweiten Ablegevorrichtung (36') eine Vorrichtung zum Wenden der Struktur umfasst.

## Claims

1. A method for manufacturing floor coverings (12, 12') for motor vehicles, comprising:
- a step of producing a web (20) of fibers (15), elongated along a longitudinal direction (X), the fibers (15) of which having an orientation forming a mean angle (α) with respect to the longitudinal direction (X),
- a step of passing the fiber web (20) along the longitudinal direction (X) through a looping system (28) comprising a set of rotating disks (30) and fixed looping elements (32) so as to generate undulations,
- following the passing step, a step of bringing the layer (20) over a conveyor (34) equipped with brushes (33), and of accumulating the undulations in the brushes (33) so as to reach a predetermined density,
- a step of depositing a first pre-needle-punched layer (38) of fibers (17) over the accumulated undulations,
- a step of assembling the accumulated undulations with the first pre-needle-punched layer (38) by needle-punching through the brushes (33) so as to obtain a structure, **characterized in that** the method comprises:
- a step of assembling the structure with a second pre-needle-punched layer (38') of fibers (17') so as to obtain a sandwich structure (12A), and
- a step of separating the sandwich structure (12A) so as to obtain two symmetrical velour coverings (12, 12'),
and **in that**:
- the web (20) is a card web with a mean angle (α) of orientation of the fibers (15) comprised between 5 and 10° and an area density comprised between 80 and 120 g/m²,
- the method comprises, prior to the passing step, a step of longitudinal drawing of the web (20), with a stretch ratio comprised between 1.5 and 2, for reducing the area density thereof.

2. The manufacturing method according to claim 1, wherein the undulations are formed by loops each having a predefined width G along a transverse direction (Y) perpendicular to the longitudinal direction (X), and a predefined height H along an elevation direction perpendicular to the longitudinal (X) and transverse (Y) directions, the mean angle α of orientation of the fiber of web (20) with respect to the longitudinal direction (X) fulfilling the relation sinα=G/2H within an accuracy of +/- 5°.

3. The manufacturing method according to claim 1 or 2, wherein the fibers (15) of the web (20), the fibers (17) of the first layer (38) and the fibers (17') of the second layer (38') are selected from fibers made of a thermoplastic polymer, such as polypropylene, Polyethylene terephthalate (PET), polyamide, polylactic acid, mixtures or copolymers thereof, or fibers of natural origin such as flax or hemp fibers used alone or as mixtures.

4. The manufacturing method according to any of claims 1 to 3, wherein the fibers (15) of the web (20), the fibers (17) of the first web (38) and the fibers (17') of the second web (38') are all made of the same material.

5. The manufacturing method according to any of claims 1 to 3, wherein at least two sets amongst the fibers (15) of the web (20), the fibers (17) of the first layer (38) and the fibers (17') of the second layer (38') are made of different materials.

6. The manufacturing method according to any of the preceding claims, comprising, following the step of assembling the accumulated undulations with the first pre-needle-punched layer (38) by needle-punching and prior to the step of assembling the structure with the second layer (38'), a step of turning the structure over.

7. A system (10) for manufacturing floor coverings (12, 12') for motor vehicles, comprising:
- a system (18) for making a web (20) of fibers (15) elongated along a longitudinal direction (X), configured for giving the fibers (15) an orientation forming a mean angle (α) with respect to the longitudinal direction (X),
- a looping system (28) comprising a set of rotating disks (30) and fixed looping elements (32) so as to generate undulations,
- a conveyor (34) equipped with brushes (33), arranged at the output of the looping system (28) for accumulating the undulations in the brushes (33) so as to reach a predetermined density,
- a first system (36) for depositing a first pre-needle-punched layer (38) of fibers (17) over the accumulated undulations,
- a first needle-punching system (40), for assembling the accumulated undulations with the first pre-needle-punched layer (38) by needle-punching through the brushes (33) so as to obtain a structure,
**characterized in that** the manufacturing system (10) includes:
- a second system (36') for depositing a second pre-needle-punched layer (38') of fibers (17') over the accumulated undulations of the structure, so as to obtain a sandwich structure (12A), and
- a system (44) for separating the sandwich structure (12A) so as to obtain two symmetrical velour coverings (12, 12'),
and **in that**:
- the web-making system (18) is a carding machine configured so that the carding web (20) produced has a mean angle (α) of orientation of the fibers (15) comprised between 5 and 10°, and an area density comprised between 80 and 120 g/m2,
- the manufacturing system (10) includes, upstream of the looping system (28), a system (22) for the longitudinal drawing of the web (20), configured for applying a stretch ratio comprised between 1.5 and 2.

8. The manufacturing system according to claim 7, wherein the drawing system (22) includes a first set (24) of upstream drive rollers, and a second set (26) of downstream drive rollers, the downstream drive rollers of the second set (26) being apt to rotationally move with a speed of rotation higher than the speed of rotation of the upstream drive rollers of the first set (24) so that the card web (20) is not moved along with the same speed over the entire length thereof.

9. The manufacturing system (10) according to claim 7 or 8, including, downstream of the first needle-punching system (40) and upstream of the second depositing system (36'), a system for turning the structure over.
